# FASCICULE DE BREVET EUROPEEN

(11) **EP 0 899 476 B1**
(45) Date de publication et mention de la délivrance du brevet: **23.04.2003**
(21) Numéro de dépôt: 98116069.0
(22) Date de dépôt: 26.08.1998
(51) Int. Cl.: F16F 1/373

(54) **Dispositif amortisseur notamment pour le montage d'une platine de support d'un méchanisme d'essuie-glace**
Dämpfungselement, insbesondere zum Lagern der Stützscheibe eines Scheibenwischermechanismusses
Damping element, in particular for the mounting of a windscreen wiper mechanism support plate

(30) Priorité: 29.08.1997 FR 9710877
(43) Date de publication de la demande: 03.03.1999
(73) Titulaire: VALEO SYSTEMES D'ESSUYAGE, 78321 La Verrière (FR)
(72) Inventeur: Colnet, Sandrine, 78320 Viroflay (FR); Caracciolo, Arnaud, 93600 Aulnay S/Bois (FR)
(74) Mandataire: Gamonal, Didier

(56) Documents cités:
- EP-A- 0 636 808
- EP-A- 0 715 086
- DE-A- 1 943 764
- FR-A- 2 135 551
- GB-A- 1 123 818
- US-A- 4 295 691

## Description

L'invention concerne un dispositif amortisseur notamment pour le montage d'une platine de support d'un mécanisme d'essuie-glace.

L'invention concerne plus particulièrement un dispositif amortisseur, notamment pour le montage d'une platine de support d'un mécanisme d'essuie-glace, comportant un bloc amortisseur qui est pourvu d'un alésage central pour le passage axial d'un organe d'assemblage et qui est monté axialement au travers d'un orifice d'un élément de plaque de la platine de telle sorte que le bord de l'orifice est reçu dans une gorge radiale aménagée dans une surface latérale externe du bloc, et dans lequel la gorge comporte deux faces transversales supérieure et inférieure réunies par une face cylindrique de fond qui est tournée radialement vers l'extérieur. Un tel dispositif amortisseur est connu du document EP-A-0 636 808.

Grâce à un tel type de dispositif amortisseur, il est par exemple possible de fixer la platine d'un mécanisme d'essuie-glace sur la caisse d'un véhicule. Par exemple, une vis est engagée axialement au travers du bloc amortisseur pour serrer celui-ci contre un élément de structure de la caisse. La vis est donc solidaire de la caisse du véhicule mais elle se trouve complètement isolée de la platine, notamment en termes de vibration, par le bloc amortisseur qui est généralement réalisé en matériau élastomère.

On s'est aperçu que de tels dispositifs amortisseurs étaient fortement sujets à des ruptures par cisaillement au niveau du fond de la gorge aménagée dans la surface latérale externe du bloc amortisseur. En effet, sous l'effet des vibrations, le bord de l'orifice de la plaque qui est reçu dans cette gorge tend à dégrader le matériau élastomère relativement fragile et celui-ci peut se déchirer rapidement.

Ce phénomène est accentué lorsqu'une entretoise cylindrique tubulaire est engagée dans l'alésage central du bloc amortisseur, interposée radialement entre l'organe de fixation et la paroi latérale de l'alésage, afin de limiter l'écrasement axial du bloc amortisseur lors du serrage de l'organe d'assemblage.

En effet, la portion du bloc amortisseur qui est comprise radialement entre l'entretoise et le bord de l'orifice de la platine se trouve alors cisaillée entre deux éléments qui sont rigides et qui sont indépendants l'un de l'autre du point de vue des vibrations.

L'invention a donc pour objet de proposer une nouvelle conception d'un dispositif amortisseur qui permette d'augmenter notablement la durée de vie d'un tel dispositif.

A cet effet, l'invention proposé un dispositif amortisseur du type décrit précédemment, caractérisé en ce que la gorge comporte un bourrelet annulaire qui s'étend radialement vers l'extérieur depuis la face cylindrique de fond de la gorge et qui coopère avec une face de chant du bord de l'orifice de la plaque.

Selon d'autres caractéristiques de l'invention :
- le bloc amortisseur comporte un évidement annulaire qui est aménagé à l'intersection de la face de fond et de l'une des faces transversales de la gorge ;
- le bloc amortisseur comporte deux évidements agencés de part et d'autre du bourrelet à l'intersection de la face de fond et de chacune des faces transversales de la gorge ;
- l'intersection de la face latérale externe du bloc avec l'une des faces transversales de la gorge est arrondie ;
- l'alésage central du bloc amortisseur comporte une paroi latérale dans laquelle est aménagé un dégagement annulaire axialement en correspondance avec la gorge aménagée dans la surface latérale externe du bloc ;
- une entretoise tubulaire est engagée dans l'alésage central du bloc amortisseur de manière à être interposée radialement entre l'organe d'assemblage et une paroi latérale de l'alésage du bloc, et l'entretoise comporte une rainure annulaire agencée axialement en correspondance avec la gorge aménagée dans la surface latérale externe du bloc ;
- l'une au moins des extrémités axiales d'une paroi latérale de l'alésage central du bloc amortisseur est arrondie ;
- le bloc amortisseur est réalisé en matériau élastomère ;
- le bloc amortisseur est réalisé en deux parties qui sont solidaires l'une de l'autre et qui sont réalisées dans des matériaux élastomères de duretés différentes.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique partielle en perspective et avec arrachement d'un dispositif amortisseur selon l'état de la technique ; et
- les figures 2 à 7 sont des vues en coupe axiale de six modes de réalisation d'un dispositif amortisseur conforme aux enseignements de l'invention.

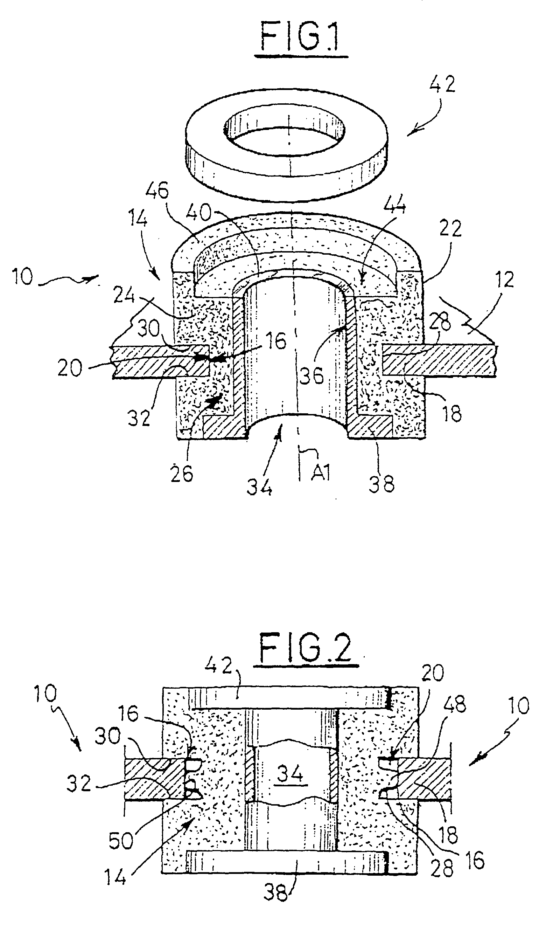

On a représenté sur la figure 1 un dispositif amortisseur 10 de type connu pour assurer le montage d'un élément de plaque 12, par exemple un élément d'une platine de support d'un mécanisme d'essuyage sur une structure de caisse d'un véhicule automobile.

Le dispositif 10 comporte essentiellement un bloc amortisseur 14, qui est de forme générale cylindrique tubulaire de révolution d'axe A1, et qui est engagé axialement au travers d'un orifice 16 de l'élément de plaque 12. A cet effet, le bord 18 de l'orifice 16 est engagé dans une gorge 20 aménagée radialement vers l'intérieur dans une surface latérale externe cylindrique 22 du bloc amortisseur 14.

Le bloc 14 est ainsi immobilisé axialement et radialement par rapport à l'orifice 16 et il comporte ainsi une portion supérieure 24 agencée au-dessus de la plaque 12 et une portion inférieure 26 agencée en dessous de celle-ci.

La gorge 20 est délimitée radialement vers l'intérieur par une face cylindrique de fond 28 qui est tournée radialement vers l'extérieur et elle est délimitée axialement par deux faces transversales supérieure 30 et inférieure 32 parallèles et en vis-à-vis.

De manière connue, le bloc amortisseur 14 comporte un alésage central 34 pour le passage d'un organe d'assemblage (non représenté) tel qu'une vis. Cet organe d'assemblage a pour but de serrer axialement le bloc amortisseur sur le deuxième élément auquel doit être reliée la platine 12.

Toutefois, pour limiter l'écrasement axial du bloc amortisseur 14, il est généralement prévu une entretoise tubulaire 36 qui est engagée axialement dans l'alésage central 34, interposée radialement entre l'organe d'assemblage et le bloc amortisseur.

Dans l'exemple de réalisation illustré sur les figures, l'entretoise 34 comporte, à une extrémité axiale inférieure, un collet radial externe 38 et elle est destinée à coopérer, à son extrémité supérieure 40, avec une rondelle annulaire 42 de telle manière que la rondelle 42 et le collet radial 38 forment des surfaces d'appui, par exemple pour la tête de la vis et pour le second élément sur lequel doit être fixée la platine 12.

De manière avantageuse, le collet radial 38 et la rondelle 42 sont reçus dans des lamages 44 aménagés dans des faces transversales d'extrémité axiale 46 du bloc amortisseur 14 de telle manière que le collet 38 et la rondelle 42 affleurent sensiblement au niveau de ces faces 46.

On a représenté sur la figure 2 un premier mode de réalisation de l'invention. Comme on peut le voir sur cette figure, le bord 18 de l'orifice 16 n'est pas en appui directement contre la face de fond 28 de la gorge 20. En effet, cette dernière comporte un bourrelet 48 qui s'étend radialement vers l'extérieur, de préférence sur toute la périphérie de la gorge 20, pour coopérer en appui radial avec une face de chant 50 du bord 18 de l'orifice 16 de la plaque 12.

Le bourrelet 48 présente une dimension, selon la direction axiale du bloc amortisseur 14, qui est inférieure à celle de la gorge 20 et donc inférieure à l'épaisseur de la plaque 12. De la sorte, le bord 18 de l'orifice 16 n'est plus au contact des zones d'intersection de la face de fond 28 de la gorge 20 avec les faces transversales 30, 32 de cette gorge 20 qui sont des zones particulièrement fragiles où se réalise généralement l'amorce de déchirure due aux efforts de cisaillement.

Dans l'exemple de réalisation de la figure 3, le bloc amortisseur comporte en plus un dégagement 52 qui est formé dans une paroi latérale 54 cylindrique de l'alésage central 16 du bloc amortisseur 14. Ce dégagement 52 est aménagé axialement en correspondance avec la gorge 20 de manière à ce qu'une portion médiane 56 du bloc amortisseur 14, comprise entre ses portions supérieure 24 et inférieure 26, présente une certaine souplesse selon la direction radiale par rapport à l'axe A1, ce qui permet de limiter les risques de déchirements du matériau élastomère.

Le dégagement 52 est par exemple en forme d'arc de cercle, de préférence de rayon suffisamment grand pour ne pas constituer une variation trop brutale de l'épaisseur de la portion médiane 56 du bloc 14.

Le dégagement 52 permet par ailleurs de limiter la compression du matériau constituant le bloc amortisseur 14 lorsque celui-ci est serré axialement par l'organe d'assemblage.

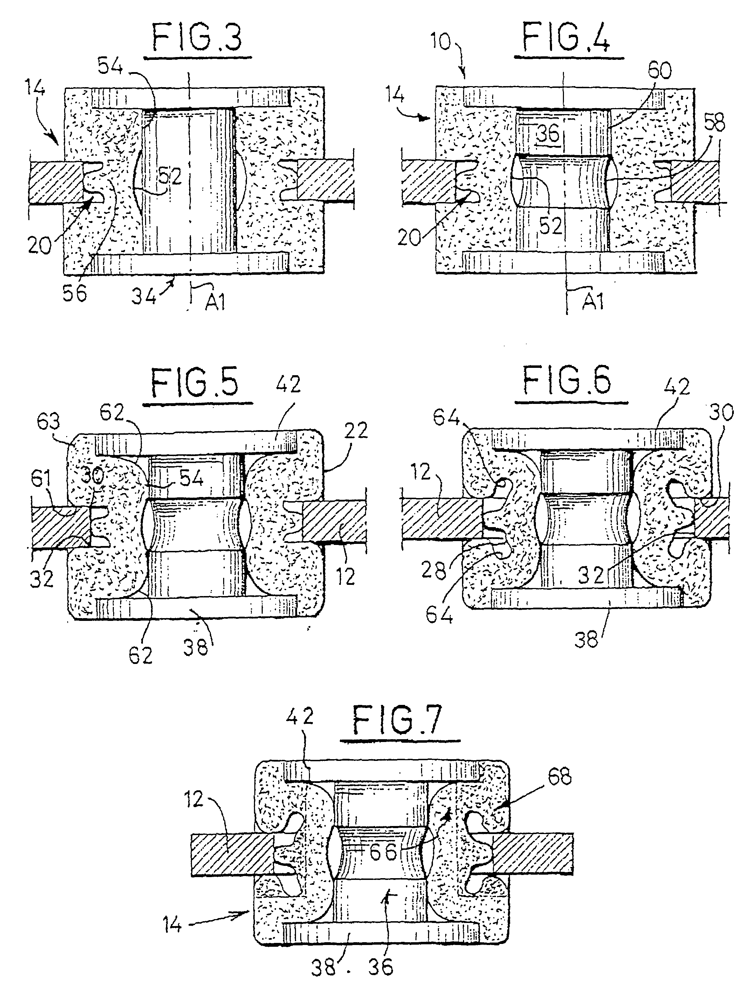

Dans l'exemple de réalisation de la figure 4, le dispositif amortisseur 10 comporte de plus une rainure annulaire 58 qui est aménagée dans une face cylindrique externe 60 de l'entretoise 36, axialement en correspondance avec la gorge 20 et avec le dégagement 52 du bloc amortisseur 14. Cette rainure 58, qui s'étend annulairement autour de l'axe A1, présente par exemple elle aussi une section en forme d'arc de cercle de relativement grand rayon.

Dans l'exemple de réalisation de la figure 5, il est prévu que les extrémités axiales de la paroi latérale 54 de l'alésage central 34 du bloc amortisseur 14, qui débouchent dans chacun des deux lamages 44, soient arrondies et non pas à angle droit. Il en de même pour l'intersection 61 de la face latérale externe 22 du bloc 14 avec chacune des faces transversales 30, 32 de la gorge 20, ainsi que pour les bords 63 d'extrémité axiale de cette face latérale 22.

En supprimant les angles vifs du bloc amortisseur 14, notamment au niveau des éventuelles zones de contact avec les composants rigides que sont l'entretoise 36, la rondelle 42 et la platine 12, on limite les contraintes dans le matériau élastomère qui constitue le bloc 14, et on limite surtout les zones de concentration de contraintes où s'amorcent généralement les déchirures.

Toujours dans ce but, le bloc amortisseur 14 illustré à la figure 6 comporte un évidement 64 qui est agencé à l'intersection de la face de fond 28 avec chacune des faces transversales 30, 32 de la gorge 20 et qui s'étend annulairement sur toute la circonférence de la gorge 20.

Avantageusement, on peut prévoir en un ou plusieur(s) point(s) de la circonférence une nervure qui s'étend dans l'évidement 64 et qui permet un meilleur maintien du bourrelet 48. Cette nervure (ou ces nervures) peut (peuvent) également permettre le centrage de l'amortisseur 14.

Enfin, l'exemple de réalisation illustré à la figure 7 montre un bloc amortisseur 14 qui est réalisé en deux parties 66, 68, les deux parties étant solidaires l'une de l'autre mais étant réalisées dans des matériaux élastomères de duretés différentes.

A titre d'exemple, une première partie 66 est au contact de l'entretoise 36 et de son collet radial externe 38 tandis qu'une seconde partie 68 est au contact de la plaque 12 et de la rondelle 42. La seconde partie 68 est ainsi agencée radialement vers l'extérieur par rapport à la première partie 66 et la gorge 20 est aménagée entièrement dans la seconde partie 68.

A titre d'exemple, on peut choisir alors de réaliser la première partie en un matériau plus dur que la seconde partie.

Bien entendu, les différentes caractéristiques qui caractérisent les modes de réalisations de l'invention qui viennent d'être décrits peuvent être combinées entre elles pour donner encore d'autres modes de réalisation qui ne sont pas illustrés mais qui entrent bien entendu dans le champ de l'invention.

## Revendications

1. Dispositif amortisseur, notamment pour le montage d'une platine (12) de support d'un mécanisme d'essuie-glace, comportant un bloc amortisseur (14) qui est pourvu d'un alésage central (34) pour le passage axial d'un organe d'assemblage et qui est monté axialement au travers d'un orifice (16) d'un élément de plaque (12) de la platine de telle sorte que le bord (18) de l'orifice (16) est reçu dans une gorge radiale (20) aménagée dans une surface latérale externe (22) du bloc (14), et dans lequel la gorge (20) comporte deux faces transversales supérieure (30) et inférieure (32) réunies par une face cylindrique de fond (28) qui est tournée radialement vers l'extérieur,
**caractérisé en ce que** la gorge (20) comporte un bourrelet (48) annulaire qui s'étend radialement vers l'extérieur depuis la face cylindrique de fond (28) de la gorge (20) et qui coopère avec une face de chant (50) du bord (18) de l'orifice (16) de la plaque (12).

2. Dispositif amortisseur selon la revendication 1, **caractérisé en ce que** le bloc amortisseur (14) comporte un évidement annulaire (64) qui est aménagé à l'intersection de la face de fond (28) et de l'une des faces transversales (30, 32) de la gorge (20).

3. Dispositif amortisseur selon la revendication 2, **caractérisé en ce que** le bloc amortisseur (14) comporte deux évidements (64) agencés de part et d'autre du bourrelet (48) à l'intersection de la face de fond (28) et de chacune des faces transversales (30, 32) de la gorge (20).

4. Dispositif amortisseur selon l'une quelconque des revendications précédentes, **caractérisé en ce que** l'intersection de la face latérale externe (22) du bloc (14) avec l'une des faces transversales (30, 32) de la gorge (20) est arrondie.

5. Dispositif amortisseur selon l'une quelconque des revendications précédentes, **caractérisé en ce que** l'alésage central (34) du bloc amortisseur (14) comporte une paroi latérale (54) dans laquelle est aménagé un dégagement annulaire (52) axialement en correspondance avec la gorge (20) aménagée dans la surface latérale externe (22) du bloc (14).

6. Dispositif amortisseur selon l'une quelconque des revendications précédentes, **caractérisé en ce qu'**une entretoise tubulaire (36) est engagée dans l'alésage central (34) du bloc amortisseur (14) de manière à être interposée radialement entre l'organe d'assemblage et une paroi latérale (54) de l'alésage (34) du bloc (14), et **en ce que** l'entretoise (36) comporte une rainure annulaire (58) agencée axialement en correspondance avec la gorge (20) aménagée dans la surface latérale externe (22) du bloc (14).

7. Dispositif amortisseur selon l'une quelconque des revendications précédentes, **caractérisé en ce que** l'une au moins des extrémités axiales (62) d'une paroi latérale (54) de l'alésage central (34) du bloc amortisseur (14) est arrondie.

8. Dispositif amortisseur selon l'une quelconque des revendications précédentes, **caractérisé en ce que** le bloc amortisseur (14) est réalisé en matériau élastomère.

9. Dispositif amortisseur selon l'une quelconque des revendications précédentes, **caractérisé en ce que** le bloc amortisseur (14) est réalisé en deux parties (66, 68) qui sont solidaires l'une de l'autre et qui sont réalisées dans des matériaux élastomères de duretés différentes.

## Patentansprüche

1. Dämpfervorrichtung, insbesondere für die Montage einer Tragplatine (12) eines Scheibenwischer-Mechanismus, mit einem Dämpferblock (14), der mit einer mittleren Bohrung (34) versehen ist, für die axiale Durchführung eines Montageorgans, und der axial durch eine Öffnung (16) eines Plattenelements (12) der Platine montiert ist, so dass der Rand (18) der Öffnung (16) in einem an einer externen Seitenfläche (22) des Blocks (14) vorgesehenen radialen Hals (20) aufgenommen wird, und bei dem der Hals (20) eine obere (30) und eine untere (32) Querfläche aufweist, die durch eine zylindrische Bodenfläche (28) vereint werden, die radial nach außen gerichtet ist, **dadurch gekennzeichnet, dass** der Hals (20) einen ringförmigen Wulst (48) aufweist, der sich von der zylindrischen Bodenfläche (28) des Halses (20) aus radial nach außen erstreckt, und der mit einer Kantenfläche (50) des Rands (18) der Öffnung (16) der Platte (12) zusammenwirkt.

2. Dämpfervorrichtung nach Anspruch 1, **dadurch gekennzeichnet, dass** der Dämpferblock (14) eine ringförmige Aussparung (64) umfasst, die am Schnittpunkt der Bodenfläche (28) und einer der Querflächen (30, 32) des Halses (20) vorgesehen ist.

3. Dämpfervorrichtung nach Anspruch 2, **dadurch gekennzeichnet, dass** der Dämpferblock (14) zwei Aussparungen (64) umfasst, die auf beiden Seiten des Wulstes (48) am Schnittpunkt der Bodenfläche (28) und jeder der Querflächen (30, 32) des Halses (20) vorgesehen sind.

4. Dämpfervorrichtung nach einem der vorherigen Ansprüche, **dadurch gekennzeichnet, dass** der Schnittpunkt der externen Seitenfläche (22) des Blocks (14) mit einer der Querflächen (30, 32) des Halses (20) abgerundet ist.

5. Dämpfervorrichtung nach einem der vorherigen Ansprüche, **dadurch gekennzeichnet, dass** die mittlere Bohrung (34) des Dämpferblocks (14) eine Seitenwand (54) umfasst, in der ein ringförmiger Freiraum (52) vorgesehen ist, der axial mit dem in der externen Seitenfläche (22) des Blocks (14) vorgesehenen Hals (20) in Verbindung steht.

6. Dämpfervorrichtung nach einem der vorherigen Ansprüche, **dadurch gekennzeichnet, dass** in die mittlere Bohrung (34) des Dämpferblocks (14) ein rohrförmiger Steg (36) eingeführt ist, so dass er radial zwischen dem Montageorgan und einer Seitenwand (54) der Bohrung (34) des Blocks (14) liegt, und dass der Steg (36) eine ringförmige, axial angeordnete Rille (58) in Verbindung mit dem in der externen Seitenfläche (22) des Blocks (14) vorgesehenen Hals (20) umfasst.

7. Dämpfervorrichtung nach einem der vorherigen Ansprüche, **dadurch gekennzeichnet, dass** zumindest eines der axialen Enden (62) einer Seitenwand (54) der mittleren Bohrung (34) des Dämpferblocks (14) abgerundet ist.

8. Dämpfervorrichtung nach einem der vorherigen Ansprüche, **dadurch gekennzeichnet, dass** der Dämpferblock (14) aus einem Elastomer-Material besteht.

9. Dämpfervorrichtung nach einem der vorherigen Ansprüche, **dadurch gekennzeichnet, dass** der Dämpferblock (14) aus zwei Teilen (66, 68) besteht, die miteinander verbunden sind und aus Elastomer-Materialien unterschiedlicher Härten bestehen.

## Claims

1. A damping device, in particular for mounting a support platen (12) of a windscreen wiper mechanism, comprising a damping block (14) which is provided with a central bore (34) for the axial passage of an assembly member which is mounted axially through an orifice (16) in a plate element (12) of the platen so that the edge (18) of the orifice (16) is received in a radial groove (20) formed in an external lateral surface (22) of the block (14), and in which the groove (20) has two top (30) and bottom (32) transverse faces joined by a cylindrical bottom face (28) which is turned radially outwards,
**characterised in that** the groove (20) comprises an annular protrusion (48) which extends radially outwards from the bottom cylindrical face (28) of the groove (20) and which cooperates with an edge face (50) of the edge (18) of the orifice (16) in the plate (12).

2. A damping device according to Claim 1, **characterised in that** the damping block (14) comprises an annular recess (64) which is provided at the intersection of the bottom face (28) and one of the transverse faces (30, 32) of the groove (20).

3. A damping device according to Claim 2, **characterised in that** the damping block (14) has two recesses (64) arranged on each side of the protrusion (48) at the intersection of the bottom face (28) and of each of the transverse faces (30, 32) of the groove (20).

4. A damping device according to any one of the preceding claims, **characterised in that** the intersection of the external lateral face (22) of the block (14) with one of the transverse faces (30, 32) of the groove (20) is rounded.

5. A damping device according to any one of the preceding claims, **characterised in that** the central bore (34) in the damping block (14) comprises a lateral wall (54) in which there is provided an annular space (52) axially in correspondence with the groove (20) formed in the external lateral surface (22) of the block (14).

6. A damping device according to any one of the preceding claims, **characterised in that** a tubular strut (36) is engaged in the central bore (34) in the damping block (14) so as to be interposed radially between the assembly member and a lateral wall (54) of the bore (34) in the block (14), and **in that** the strut (36) comprises an annular groove (58) arranged axially in correspondence with the groove (20) provided in the external lateral surface (22) of the block (14).

7. A damping device according to any one of the preceding claims, **characterised in that** at least one of the axial ends (62) of a lateral wall (54) of the central bore (34) in the damping block (14) is rounded.

8. A damping device according to any one of the preceding claims, **characterised in that** the damping block (14) is produced from elastomer material.

9. A damping device according to any one of the preceding claims, **characterised in that** the damping block (14) is produced in two parts (66, 68) which are fixed to each other and which are produced from elastomer materials with different hardnesses.
